# EUROPEAN PATENT APPLICATION

(11) **EP 4 530 488 A1**
(43) Date of publication of application: **02.04.2025**
(21) Application number: 23846586.8
(22) Date of filing: 26.07.2023
(51) Int. Cl.: F16C 27/02

(54) **RADIAL FOIL BEARING, AND METHOD FOR MANUFACTURING RADIAL FOIL BEARING**

(30) Priority: 26.07.2022 JP 2022118530
(71) Applicant: IHI Corporation, Tokyo 135-8710 (JP)
(72) Inventor: ISHIKAWA, Shonosuke, Tokyo 135-8710 (JP); YOKOYAMA, Yusei, Tokyo 135-8710 (JP); UEDA, Wataru, Tokyo 135-8710 (JP)
(74) Representative: TBK
(86) International application number: PCT/JP2023/027437
(87) International publication number: WO 2024/024856

(57) **Abstract**

A radial foil bearing includes a top foil including a facing surface facing a rotating shaft, a bump foil disposed on an outside opposite to the facing surface of the top foil, and a bearing housing disposed to surround the bump foil. The bump foil includes a cylindrical portion surrounding the top foil in a cylindrical shape, and an elastic piece portion adjacent to the cylindrical portion in an axial direction of the rotating shaft, the elastic piece portion being deformable independently of the cylindrical portion and expandable in a circumferential direction. The elastic piece portion is supported by the bearing housing.

## Description

### Technical Field

The present disclosure relates to a radial foil bearing and a method for manufacturing the radial foil bearing.

### Background Art

For example, a radial foil bearing described in Patent Literature 1 includes a thin plate-shaped top foil surrounding a rotating shaft, a thin plate-shaped bump foil surrounding the top foil, and a cylindrical housing accommodating the top foil and the bump foil. Further, the radial foil bearing described in Patent Literatures 2 to 5 includes a top foil that is elastically supported directly by the housing without including a bump foil.

### Citation List

### Patent Literature

Patent Literature 1: Japanese Unexamined Patent Publication No. 2004-190761
Patent Literature 2: WO 2014/098005 A1
Patent Literature 3: Japanese Unexamined Patent Publication No. 2017-82909
Patent Literature 4: Japanese Unexamined Patent Publication No. 2018-150971
Patent Literature 5: Japanese Unexamined Patent Publication No. 2019-82195

### Summary of Invention

### Technical Problem

In the radial foil bearing described above, a problem remains in terms of stable support of the rotating shaft during high-speed rotation.

The present disclosure describes a radial foil bearing and a method for manufacturing the radial foil bearing capable of stably supporting a rotating shaft during high-speed rotation.

### Solution to Problem

A radial foil bearing according to an example of the present disclosure is a radial foil bearing including a top foil including a facing surface facing a rotating shaft, a bump foil disposed on an outside opposite to the facing surface of the top foil, and a bearing housing disposed to surround the bump foil. The bump foil includes a cylindrical portion surrounding the top foil in a cylindrical shape, and an elastic piece portion adjacent to the cylindrical portion in an axial direction of the rotating shaft, the elastic piece portion being deformable independently of the cylindrical portion and expandable in a circumferential direction. The elastic piece portion is supported by the bearing housing.

The bump foil includes a cylindrical portion and an elastic piece portion, and the elastic piece portion is deformable independently of the cylindrical portion. The elastic piece portion is directly or indirectly supported by the bearing housing and supports the top foil via the cylindrical portion adjacent in the axial direction. In addition, since the elastic piece portion is expandable in the circumferential direction while being supported by the bearing housing, the elastic piece portion is resistant to vibration of the rotating shaft rotating at a high speed, and the like, and stable support is possible.

In some examples, the elastic piece portion and the cylindrical portion may be integrally formed, and the bump foil may include a slit structure separating the elastic piece portion from the cylindrical portion so that the elastic piece portion is deformable independently of the cylindrical portion. Since the elastic piece portion and the cylindrical portion are integrally provided, when installation of the cylindrical portion is completed, appropriate installation of the elastic piece portion is completed. As a result, assemblability at the time of installing the bump foil can be improved.

In some examples, the bump foil may include a coupling portion coupling the cylindrical portion and the elastic piece portion, the elastic piece portion may include a peak edge portion formed on a side opposite to the coupling portion in the circumferential direction, and a side edge portion extending from the peak edge portion to the coupling portion. The peak edge portion may be formed by the slit structure to be a free end. The peak edge portion to be a free end is movable with the coupling portion coupled to the cylindrical portion as a fulcrum.

In some examples, the bump foil may include a first end edge being an end on one side in the axial direction, and a second end edge opposite to the first end edge in the axial direction, the slit structure may include a slit forming the peak edge portion, and a side slit connected to the slit and forming the side edge portion, and the slit and the side slit may be spaced apart from the first end edge and the second end edge and are configured to close within the bump foil. It is easy to form the elastic piece portion having a desired elastic force at a position spaced apart from the first end edge or the second end edge of the bump foil, for example, at a position close to the center in the axial direction.

In some examples, the bump foil may include a first end edge being an end on one side in the axial direction, and a second end edge opposite to the first end edge in the axial direction. The slit structure may include a slit forming the peak edge portion. The slit may be opened at the first end edge or the second end edge, and at least a portion of the side edge portion may be formed at the first end edge or the second end edge where the slit is opened. The slit forming the peak edge portion to be a free end is opened at the first end edge or the second end edge of the bump foil. Therefore, the peak edge portion can be easily formed by making a cut or the like from the first end edge or the second end edge.

In some examples, the slit structure may include a slit forming the peak edge portion. The elastic piece portion may include a plurality of crest portions arranged adjacent to each other in the circumferential direction and expandable in the circumferential direction by elastic deformation. The slit may extend along the crest portions while avoiding the crest portions between the crest portions arranged adjacent to each other. An elastic function of the plurality of crest portions expandable in the circumferential direction is hardly impaired by the elastic deformation.

In some examples, the slit structure may include a slit forming the peak edge portion, a plurality of the elastic piece portions may be provided side by side in the circumferential direction, and the peak edge portion of one of the elastic piece portions adjacent to each other and the peak edge portion of another of the elastic piece portions may be formed by the slit in common. By making the slit forming the peak edge portion of one of the adjacent elastic piece portions and the peak edge portion of another of the other elastic piece portions in common, the interval between the adjacent elastic piece portions can be reduced, and shapes and dimensions of the elastic piece portions, the number of elastic piece portions formed in the circumferential direction, and the like can be easily optimized.

In some examples, the slit structure may further include a side slit forming the side edge portion, and a width of the slit in the circumferential direction may be larger than a width of the side slit in the axial direction. For example, when the peak edge portion of one of the elastic piece portions adjacent to each other in the circumferential direction and the peak edge portion of another of the elastic piece portions are formed by a slit in common, when the elastic piece portions are expanded, the peak edge portion of the one of the elastic piece portions and the peak edge portion of the another of the elastic piece portions move in a direction of approaching each other. Here, since the width of the slit is larger than the width of the side slit, it is easy to prevent interference between the peak edge portions as compared with a case where the width of the slit and the width of the side slit are the same.

In some examples, a set foil disposed to surround the bump foil and supporting the elastic piece portion may be further included. In the set foil, it is possible to prevent the elastic piece portion from springing outward from the cylindrical portion and prevent the elastic function from deteriorating. In addition, by providing the set foil, friction is generated between the bump foil and the set foil, and damping performance is improved.

One example of the present disclosure is a method for manufacturing a radial foil bearing including a top foil including a facing surface facing a rotating shaft, a bump foil disposed on an outside of the top foil, and a bearing housing disposed to surround the bump foil. This manufacturing method includes a step of rolling a stack in which the top foil in an unfolded state and the bump foil in an unfolded state are overlapped to form a cylindrical foil assembly, and a step of inserting and installing the foil assembly into a cylindrical bearing housing so as to surround the rotating shaft. The bump foil includes a cylindrical portion surrounding the top foil in a cylindrical shape, and an elastic piece portion adjacent to the cylindrical portion in an axial direction of the rotating shaft, the elastic piece portion being deformable independently of the cylindrical portion and expandable in a circumferential direction. By inserting the foil assembly into the bearing housing, the elastic piece portion is supported by the bearing housing. According to this manufacturing method, it is possible to manufacture a radial foil bearing capable of stably supporting a rotating shaft during high-speed rotation while improving assemblability.

In some examples, in the step to form the foil assembly, a set foil in an unfolded state may be disposed so as to overlap the bump foil on a side opposite to the top foil to form the stack, and the stack may be rolled to form the foil assembly. It is possible to manufacture a radial foil bearing that prevents the elastic function from deteriorating and improves damping performance.

### Effects of Invention

According to some examples of the present disclosure, it is possible to stably support a rotating shaft during high-speed rotation.

### Brief Description of Drawings

FIG. 1 is a cross-sectional view illustrating an example of a rotary machine.
FIG. 2 is a perspective view illustrating an example of a radial foil bearing.
FIG. 3 is a cross-sectional view of the radial foil bearing taken along a cross section orthogonal to the rotating shaft.
FIG. 4 is a perspective view of a foil assembly.
FIG. 5 illustrates a bump foil in an unfolded state, in which a view of (a) is a plan view of the bump foil, and a view of (b) is a perspective view of the bump foil.
FIG. 6 is a schematic cross-sectional view for functionally describing the radial foil bearing.
FIG. 7 is a perspective view illustrating a step of manufacturing the radial foil bearing, in which (a) is a perspective view illustrating a state in which a top foil, a bump foil, and a set foil are arranged vertically, (b) is a perspective view illustrating a foil assembly (stack) before being rolled, and (c) is a perspective view illustrating a state in which the foil assembly is inserted into a bearing housing.
FIG. 8 is a schematic cross-sectional view for functionally describing a radial foil bearing according to a modification.
FIG. 9 illustrates a first modification of the bump foil, is a plan view of the bump foil in an unfolded state as viewed from a back, and is a partially enlarged view.
FIG. 10 illustrates a second modification of the bump foil, and is a plan view of the bump foil in an unfolded state as viewed from the back.

### Description of Embodiments

Hereinafter, embodiments of the present disclosure will be described with reference to the drawings. Note that, in the description of the drawings, the same elements are given the same reference signs, and a repeated description is omitted.

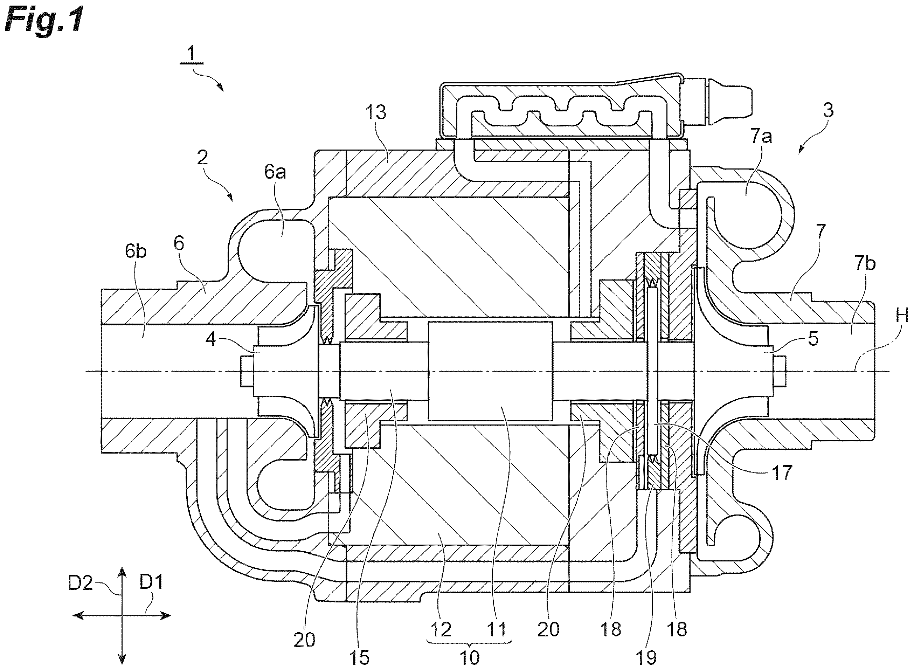

FIG. 1 illustrates a rotary machine 1. The rotary machine 1 is, for example, an electrically-assisted turbocharger. The rotary machine 1 includes a turbine 2, a compressor 3, an electric motor 10, and a rotating shaft 15. The turbine 2 includes a turbine impeller 4 provided at one end of the rotating shaft 15 and a turbine housing 6 that accommodates the turbine impeller 4. The compressor 3 includes a compressor impeller 5 provided at the other end of the rotating shaft 15, and a compressor housing 7 accommodating the compressor impeller 5.

A rotor 11 of the electric motor 10 is disposed, for example, at the center of the rotating shaft 15. The rotor 11 is fixed to the rotating shaft 15 and is rotatable together with the rotating shaft 15. A stator 12 of the electric motor 10 is disposed to surround the rotor 11. The stator 12 is fixed to a motor housing 13 provided between the turbine housing 6 and the compressor housing 7. The stator 12 can rotate the rotor 11 by generating a magnetic field around the rotating shaft 15. The rotation of the rotating shaft 15 is assisted by the cooperation of the rotor 11 and the stator 12.

In the rotary machine 1, exhaust gas discharged from the internal combustion engine flows into the turbine housing 6 through a scroll flow path 6a, and rotates the turbine impeller 4 about the rotation axis H. The exhaust gas that has rotated the turbine impeller 4 is discharged through a discharge port 6b of the turbine housing 6. When the turbine impeller 4 rotates as described above, the compressor impeller 5 rotates via the rotating shaft 15. At this time, torque is applied to the rotating shaft 15 by the electric motor 10, so that the rotation of the rotating shaft 15 and the compressor impeller 5 is assisted. The rotating compressor impeller 5 sucks external air through a suction port 7b of the compressor housing 7. This air is compressed while passing through the compressor impeller 5 and a scroll flow path 7a. The compressed air is discharged from a discharge port of the compressor housing 7 and supplied to the internal combustion engine.

The rotating shaft 15 is rotatably supported around the rotation axis H via a plurality of bearings. At least one of the plurality of bearings is a radial foil bearing 20 of the present disclosure. In the example illustrated in FIG. 1, a pair of radial foil bearings 20 is provided at both ends of the rotating shaft 15, respectively. The radial foil bearing 20 is an air bearing that supports the rotating shaft 15 in the radial direction (that is, the direction perpendicular to the rotation axis H).

In the rotary machine 1 of the present disclosure, a thrust collar 17 and a pair of thrust air bearings 18 are provided between the radial foil bearing 20 closer to the compressor impeller 5 out of the pair of radial foil bearings 20 and the compressor impeller 5. The thrust collar 17 is a disk-shaped member formed so as to protrude in a flange shape around the rotating shaft 15. The pair of thrust air bearings 18 is provided at positions sandwiching the thrust collar 17. A spacer 19 surrounding the thrust collar 17 is provided between the pair of thrust air bearings 18. The thrust collar 17 and the pair of thrust air bearings 18 support the rotating shaft 15 in a thrust direction (that is, a direction parallel to the rotation axis H).

### <Radial Foil Bearing>

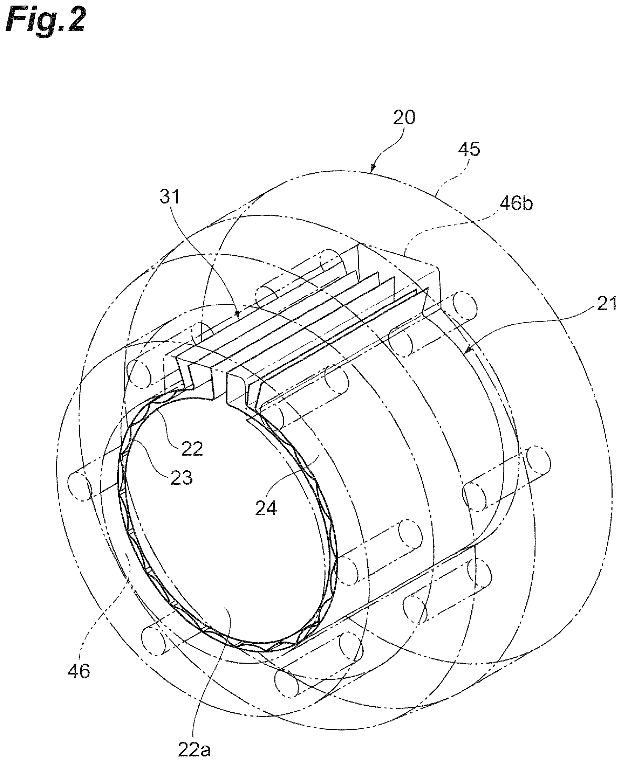

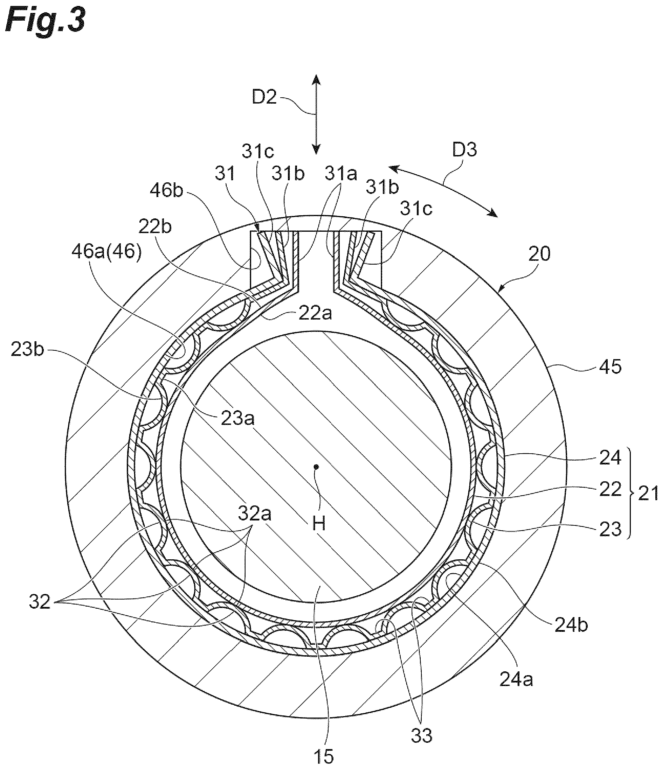

Subsequently, an example of the radial foil bearing 20 will be described in detail with reference to FIGS. 2 and 3. Note that the rotary machine 1 of the present disclosure includes the pair of radial foil bearings 20, and the pair of radial foil bearings 20 has substantially the same structure. Therefore, one radial foil bearing 20 will be described below as a representative.

The radial foil bearing 20 includes a foil assembly 21 and a bearing housing 45 housing the foil assembly 21. The foil assembly 21 includes a top foil 22, a bump foil 23 surrounding the top foil 22, and a set foil 24 surrounding the bump foil 23. As the rotating shaft 15 rotates, an air film is formed between the rotating shaft 15 and the top foil 22. The radial foil bearing 20 rotatably supports the rotating shaft 15 by forming the air film.

### <Bearing Housing>

The bearing housing 45 is a substantially cylindrical casing, and has a shaft hole 46 through which the rotating shaft 15 is inserted. The foil assembly 21 is accommodated in the shaft hole 46 so as to surround the rotating shaft 15. That is, the bearing housing 45 is disposed to surround the bump foil 23 with the set foil 24 interposed therebetween. For example, the bearing housing 45 includes a cylindrical inner peripheral surface inside. This inner peripheral surface can be considered as an outer peripheral surface of the shaft hole 46. The inner peripheral surface faces the foil assembly 21 and substantially supports the foil assembly 21.

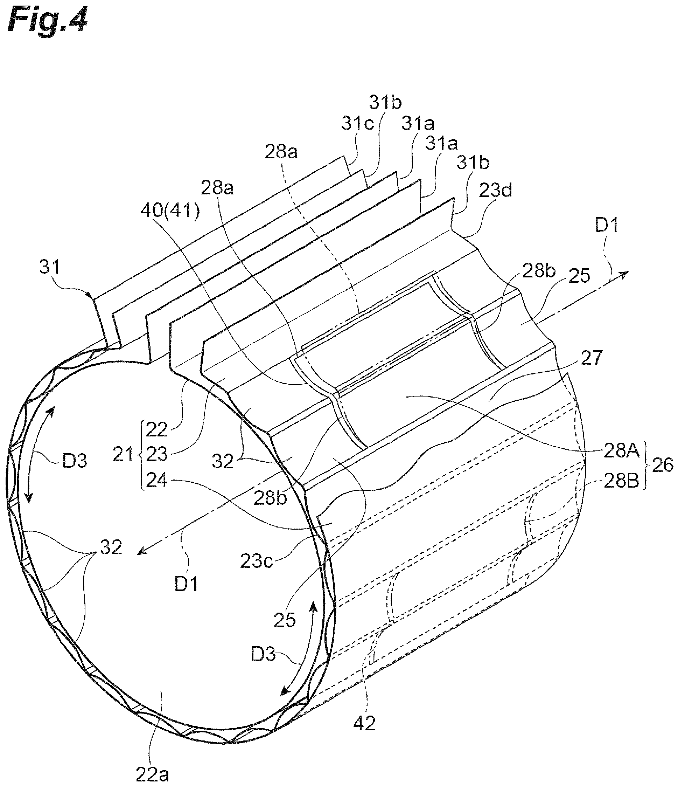

The shaft hole 46 penetrates the bearing housing 45 in the direction in which the rotation axis H extends. In the following description, a direction in which the shaft hole 46 extends, that is, a direction in which the rotation axis H (rotating shaft 15) extends is referred to as an "axial direction D1" (see FIG. 4). In addition, a radial direction of the shaft hole 46, that is, a direction perpendicular to the rotation axis H (rotating shaft 15) is referred to as a "radial direction D2". Further, a circumferential direction of the rotating shaft 15, that is, a direction along a ring centered on the rotation axis H is referred to as a "circumferential direction D3".

The bearing housing 45 is, for example, a member having sufficient strength to support the rotating shaft 15 that has stopped rotating. The rotating shaft 15 is disposed so as to pass through the center of the shaft hole 46 of the bearing housing 45. The foil assembly 21 rolled in a cylindrical shape is disposed between the inner peripheral surface 46a of the shaft hole 46 and the rotating shaft 15. The foil assembly 21 is provided with a locking structure 31 protruding in the radial direction D2, and the inner peripheral surface 46a of the shaft hole 46 is provided with a locking groove 46b in which the locking structure 31 is accommodated. The locking structure 31 is provided to extend in the axial direction D1, and the locking groove 46b is a vertically long groove extending in the axial direction D1 so as to accommodate the locking structure 31. The width of the locking groove 46b in the circumferential direction D3 corresponds to the width of the locking structure 31 in the circumferential direction D3, and the locking groove 46b can abut on the locking structure 31 in the circumferential direction D3. When the foil assembly 21 attempts to move in the circumferential direction D3 of the rotating shaft 15, the locking structure 31 interferes with the locking groove 46b. As a result, the rotation of the foil assembly 21 is suppressed.

### <Foil Assembly>

As illustrated in FIGS. 2, 3, and 4, the foil assembly 21 includes the top foil 22, the bump foil 23, and the set foil 24. Each of the top foil 22, the bump foil 23, and the set foil 24 is formed of a metal thin plate and has flexibility. The top foil 22, the bump foil 23, and the set foil 24 overlap in this order and have a cylindrical shape so that the top foil 22 is on the inner peripheral side.

### <Top Foil>

The cylindrical top foil 22 includes an inner peripheral surface facing the rotating shaft 15 and an outer peripheral surface 22b opposite to the inner peripheral surface. The inner peripheral surface is a facing surface 22a facing the rotating shaft 15. The top foil 22 in the unfolded state is a substantially rectangular thin plate without a slit or the like, and both ends in the longitudinal direction are first hooks 31a bent in an L shape.

### <Bump Foil>

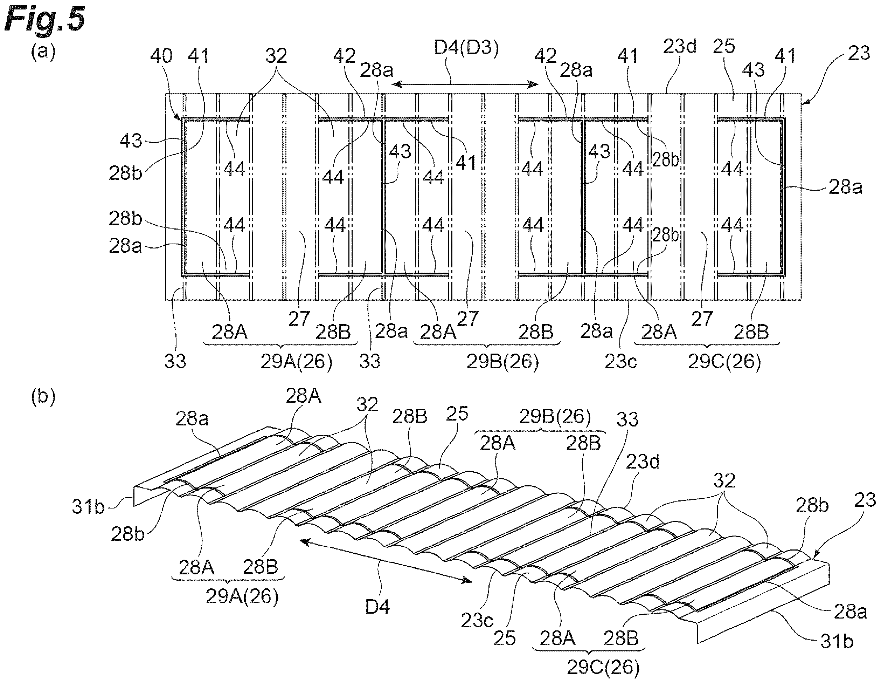

The cylindrical bump foil 23 includes an inner peripheral surface 23a facing the top foil 22 and an outer peripheral surface 23b opposite to the inner peripheral surface 23a. The bump foil 23 in the unfolded state (see FIG. 5) is a thin plate having a substantially rectangular shape in plan view, and both ends in a longitudinal direction D4 are second hooks 31b bent in an L shape. Note that the longitudinal direction D4 means the circumferential direction D3 in a state where the bump foil 23 is rolled. Therefore, in the following description, the longitudinal direction D4 and the circumferential direction D3 will be described as the circumferential direction D3 in a unified manner unless it is necessary to distinguish the longitudinal direction D4 and the circumferential direction D3.

Unlike the top foil 22, the bump foil 23 includes a plurality of crest portions 32 provided side by side in the circumferential direction D3. The crest portions 32 are each intended to be a shape portion protruding so as to bulge inward with respect to the inner peripheral surface 23a, and a valley portion 33 is formed between the plurality of crest portions 32 on the inner peripheral surface 23a. Note that, with reference to the outer peripheral surface 23b, the crest portions 32 are recessed portions, and conversely, the valley portions 33 are bulged portions. Note that the crest portions 32 of the present disclosure have a corrugated shape in which concavo-convex shapes curved in the circumferential direction D3 are alternately formed, but the concavo-convex shapes may be discontinuous in the middle to partially form the crest portion. In addition, instead of the corrugated shape, a dome shape or a convex curved surface shape that forms a part of a sphere may be used.

The crest portions 32 are each curved in an arc shape in a cross-sectional view, can be expanded in the circumferential direction D3 by elastic deformation, and have flexibility, for example. This cross-sectional view is assumed to be a cross-sectional view when the bump foil 23 is cut along a plane along the circumferential direction D3. The crest portions 32 are provided to bulge inward facing the top foil 22. When the foil assembly 21 is formed, apexes 32a of the arc-shaped crest portions 32 can abut on the outer peripheral surface 22b of the top foil 22. In the bump foil 23 according to the present embodiment, the plurality of crest portions 32 is arranged in the circumferential direction D3, and the apex 32a of each crest portion 32 extends in the axial direction D1. Thus, when a load in the radial direction D2 is applied to the bump foil 23, the bump foil 23 is deformed so as to extend (spread) in the circumferential direction D3 from the vicinity of the portion to which the load is applied.

The bump foil 23 includes a cylindrical portion 25, an elastic portion 26, and a coupling portion 27 that couples the cylindrical portion 25 and the elastic portion 26. The cylindrical portion 25 is a portion that surrounds the top foil 22 in a cylindrical shape. The cylindrical portion 25 is, for example, a portion that is continuous without interruption from one end portion to the other end portion of the bump foil 23 in the circumferential direction D3. Note that the meaning of the cylindrical portion 25 being a portion that is continuous without interruption in the circumferential direction D3 is, for example, a portion that is not divided by a slit or the like extending in the axial direction D1 in the middle of the circumferential direction D3. In addition, since it is sufficient that the cylindrical portion 25 is not completely cut in the axial direction D1, displacement in the axial direction D1 is not excluded. For example, the cylindrical portion 25 may be curved in the axial direction D1 halfway in the circumferential direction D3 between one end and the other end of the bump foil 23, or may be a structure having one continuous curved shape in the circumferential direction D3.

The elastic portion 26 is provided integrally with the cylindrical portion 25. The elastic portion 26 includes a first elastic piece portion 28A and a second elastic piece portion 28B extending in the circumferential direction D3 from the coupling portion 27. The first elastic piece portion 28A and the second elastic piece portion 28B are arranged so as to be adjacent to the cylindrical portion 25 in the axial direction D1, and can be deformed independently of the cylindrical portion 25. Therefore, for example, when a load is applied only to the first elastic piece portion 28A and the second elastic piece portion 28B, the first elastic piece portion 28A and the second elastic piece portion 28B are greatly deformed in the circumferential direction D3, and the cylindrical portion 25 is hardly deformed. As a result, the first elastic piece portion 28A and the second elastic piece portion 28B expand in the circumferential direction D3 more than the cylindrical portion 25.

As described later, the first elastic piece portion 28A and the second elastic piece portion 28B are formed by a slit structure 40, and the first elastic piece portion 28A and the second elastic piece portion 28B can be deformed independently of the cylindrical portion 25 by the slit structure 40. That is, the first elastic piece portion 28A and the second elastic piece portion 28B do not affect each other by the width of the slit structure 40, and can be deformed in the circumferential direction D3. In the present disclosure, the thickness of the metal plate constituting the bump foil 23 is uniform. Therefore, the first elastic piece portion 28A and the second elastic piece portion 28B have a structure that is more easily deformed than the cylindrical portion 25.

The first elastic piece portion 28A and the second elastic piece portion 28B are supported on a cylindrical inner peripheral surface of the bearing housing 45. Note that "supported by the bearing housing 45" includes both the case of being directly supported in contact with the bearing housing 45 and the case of being indirectly supported with an inclusion present between the bearing housing 45 and the bearing housing. In the present disclosure, the set foil 24 is provided as an inclusion, and the first elastic piece portion 28A and the second elastic piece portion 28B are indirectly supported by the bearing housing 45.

The first elastic piece portion 28A and the second elastic piece portion 28B are curved so as to have flexibility, and can be expanded in the circumferential direction D3 so as to be elastically deformable. The first elastic piece portion 28A includes a peak edge portion 28a formed on the opposite side in the circumferential direction D3 with respect to the coupling portion 27, and a side edge portion 28b extending from the peak edge portion 28a to the coupling portion 27. Further, the second elastic piece portion 28B includes a peak edge portion 28a formed on the side opposite to the coupling portion 27 in the circumferential direction D3, and a side edge portion 28b extending from the peak edge portion 28a to the coupling portion 27. Here, "the side opposite to the coupling portion 27 in the circumferential direction D3" means a position of an end portion on the side opposite to the coupling portion 27 with respect to the circumferential direction D3.

It can also be described that the first elastic piece portion 28A extends from the coupling portion 27 in one direction with reference to the circumferential direction D3. It can also be described that the second elastic piece portion 28B extends from the coupling portion 27 in a direction opposite to one direction with reference to the circumferential direction D3. In addition, it can also be described that the peak edge portion 28a, which is a free end movable with the coupling portion 27 as a fulcrum, is formed at each tip of the first elastic piece portion 28A and the second elastic piece portion 28B.

When the bump foil 23 in the unfolded state (see FIG. 4) is rolled into a cylindrical shape, the first elastic piece portion 28A and the second elastic piece portion 28B are provided so as to protrude in a curved state toward the tangential direction of the cylindrical portion 25, for example. The bump foil 23 is surrounded by a set foil 24, and the set foil 24 is, for example, a thin plate having a substantially rectangular shape and having no slit or the like formed therein. While surrounded by the set foil 24, the first elastic piece portion 28A and the second elastic piece portion 28B are pressed against the set foil 24. As a result, a state in which the first elastic piece portion 28A and the second elastic piece portion 28B protrude so as to spring from the cylindrical portion 25 is eliminated. The first elastic piece portion 28A and the second elastic piece portion 28B are curved in an arc shape by abutting on the set foil 24. In addition, the first elastic piece portion 28A and the second elastic piece portion 28B elastically support the cylindrical portion 25 by abutting on the set foil 24 in a state of being curved in an arc shape, and further elastically support the top foil 22 via the cylindrical portion 25.

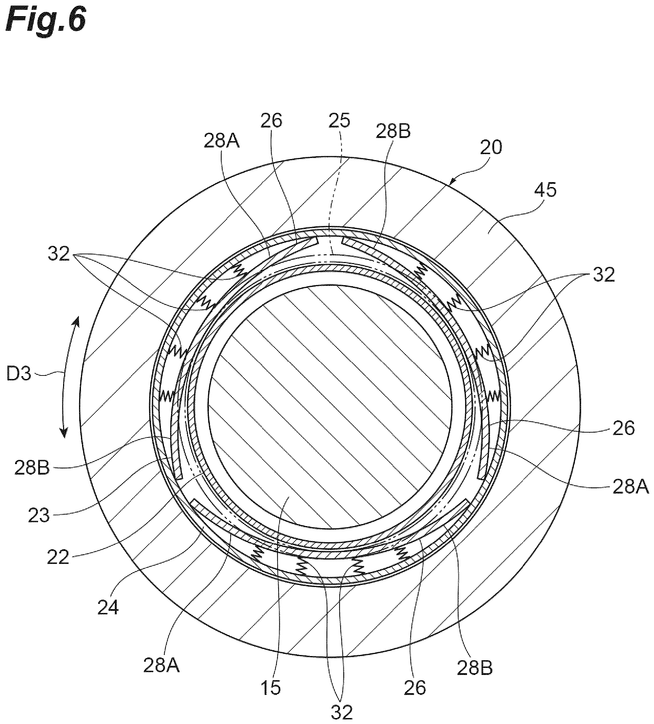

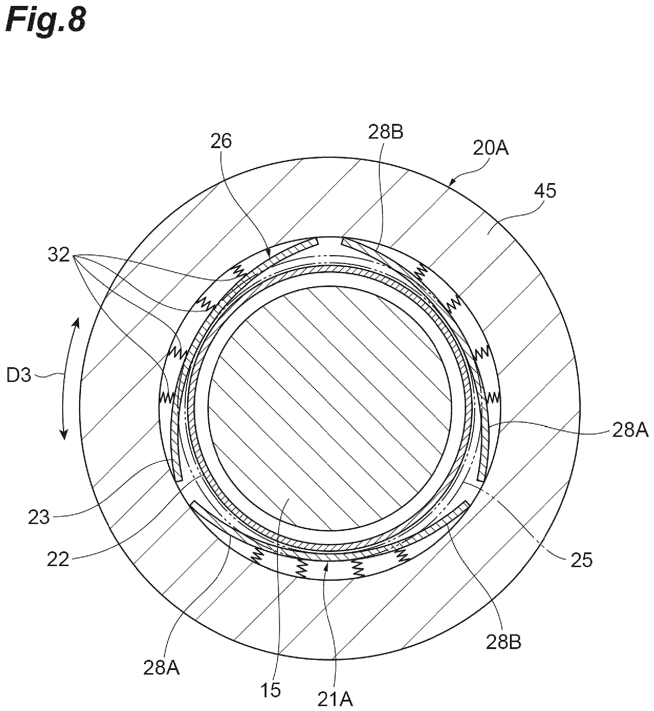

As described above, the elastic portion 26 includes the first elastic piece portion 28A and the second elastic piece portion 28B, and the first elastic piece portion 28A and the second elastic piece portion 28B are curved in an arc shape. In the present disclosure, the first elastic piece portion 28A and the second elastic piece portion 28B are provided with a plurality of crest portions 32. The crest portions 32 are already curved in an arc shape before the bump foil 23 is rolled. On the other hand, the "arc shape" of the first elastic piece portion 28A and the second elastic piece portion 28B is not formed in the state before the bump foil 23 is rolled up, and is a shape grasped separately from the arc shapes of the crest portions 32, and is formed by rolling the bump foil 23. For example, in a case where the first elastic piece portion 28A and the second elastic piece portion 28B are functionally grasped, for convenience, the plurality of crest portions 32 can be omitted and grasped as an arc shape without unevenness (see FIG. 6). The same applies to the cylindrical portion 25 in terms of function, and the plurality of crest portions 32 can be omitted and can be grasped as a cylindrical shape without unevenness. Note that, in FIG. 6, the crest portions 32 are functionally simply expressed as elastic bodies, and are illustrated as, for example, a spring having a simple shape. Further, in FIG. 8, the crest portions 32 are illustrated as springs having a simple shape similarly to FIG. 6.

As a functional concept, the first elastic piece portion 28A in which the crest portion 32 is omitted can be assumed as a curved plate-like portion extending in the circumferential direction D3 from the coupling portion 27. That is, the curved plate-like portion can be grasped as a simple shape curved in an arc shape without waving. The same applies to the second elastic piece portion 28B, and as a result of functionally omitting the crest portion 32, the second elastic piece portion 28B can be grasped as a simple shape curved in an arc shape without waving. Further, the arc curvature center of the first elastic piece portion 28A and the second elastic piece portion 28B is located inside the bump foil 23. Note that the inward position of the bump foil 23 is an inward position closer to the rotating shaft 15 than the bump foil 23. Further, the curvature radius of the first elastic piece portion 28A is larger than the curvature radius of the cylindrical portion 25, and the curvature radius of the second elastic piece portion 28B is larger than the curvature radius of the cylindrical portion 25. Note that the crest portions 32 formed in the first elastic piece portion 28A and the second elastic piece portion 28B have an arc shape in which the center of curvature is located at a position outside the bump foil 23, and have a technical significance different from that of the arc shapes of the first elastic piece portion 28A and the second elastic piece portion 28B. Here, the outward position of the bump foil 23 is an outward position farther from the rotating shaft 15 than the bump foil 23.

Next, the slit structure 40 provided in the bump foil 23 will be described. First, the bump foil 23 includes a first end edge 23c that is an end on one side in the axial direction D1, and a second end edge 23d opposite to the first end edge 23c in the axial direction D1. The slit structure 40 may form the first elastic piece portion 28A or the second elastic piece portion 28B independently of the first end edge 23c and the second end edge 23d, or may form the first elastic piece portion 28A or the second elastic piece portion 28B in cooperation with the first end edge 23c or the second end edge 23d.

Further, the slit structure 40 has a function as a boundary for separating the first elastic piece portion 28A and the second elastic piece portion 28B from the cylindrical portion 25, and forms a portion where the first elastic piece portion 28A and the second elastic piece portion 28B are connected to the coupling portion 27. The slit structure 40 includes a first slit continuous portion 41 forming the first elastic piece portion 28A and a second slit continuous portion 42 forming the second elastic piece portion 28B.

The first slit continuous portion 41 (see FIG. 5) includes a slit 43 that forms a peak edge portion 28a and two (a plurality of) side slits 44 that are connected to communicate with the slit 43 and form a side edge portion 28b. The slit 43 extends, for example, in the axial direction D1. The slit 43 separates the distal end of the first elastic piece portion 28A from the cylindrical portion 25 so as to form the peak edge portion 28a. The side slit 44 extends in a direction intersecting the slit 43. The direction intersecting the slit 43 includes not only a direction orthogonal to the longitudinal direction of the slit 43 but also a direction inclined with respect to the direction orthogonal to the slit 43. The side slit 44 is provided so as to be connected to both ends of the slit 43. The side slit 44 extends in the circumferential direction D3 so as to separate the side edge portion 28b of the first elastic piece portion 28A from the cylindrical portion 25.

The slit 43 and the side slit 44 of the present disclosure are spaced apart from the first end edge 23c and the second end edge 23d, which are both side edges of the bump foil 23, and do not reach the first end edge 23c or the second end edge 23d. That is, the slit 43 and the side slit 44 are provided to be closed in the bump foil 23 without being opened at the first end edge 23c or the second end edge 23d.

Further, the slit 43 is provided between the adjacent crest portions 32 so as to avoid the crest portions 32. Furthermore, the slit 43 is provided at the position of the valley portion 33 so as to extend along the crest portion 32. That is, the peak edge portion 28a serving as a free end of the first elastic piece portion 28A and the second elastic piece portion 28B is provided along the valley portion 33. By providing the peak edge portion 28a while avoiding the crest portions 32, it is possible to prevent the elastic function of the crest portions 32 from being hindered.

The second slit continuous portion 42 has substantially the same structure as the first slit continuous portion 41, and includes a slit 43 and two (a plurality of) side slits 44. The second slit continuous portion 42 is provided so as to be symmetric with respect to the first slit continuous portion 41 in the circumferential direction D3 of the rotating shaft 15.

The coupling portion 27 is disposed between the first slit continuous portion 41 and the second slit continuous portion 42. The coupling portion 27 is a portion that couples and integrates the first elastic piece portion 28A and the second elastic piece portion 28B with the cylindrical portion 25. The distance from the coupling portion 27 to the slit 43 of the first slit continuous portion 41 is the same as the distance from the coupling portion 27 to the slit 43 of the second slit continuous portion 42. Note that the distance from the coupling portion 27 to the slit 43 of the first slit continuous portion 41 may be different from the distance from the coupling portion 27 to the slit 43 of the second slit continuous portion 42.

In the present disclosure, the bump foil 23 is formed with a plurality of first slit continuous portions 41 and second slit continuous portions 42. As a result, the plurality of first elastic piece portions 28A and the plurality of second elastic piece portions 28B are formed. In addition, the plurality of elastic portions 26 is formed by forming the plurality of first elastic piece portions 28A and the plurality of second elastic piece portions 28B.

As illustrated in FIG. 5, for example, in the bump foil 23 in the unfolded state, the first slit continuous portion 41 and the second slit continuous portion 42 are alternately formed along the circumferential direction D3. As a result, the bump foil 23 in the unfolded state is formed so that the first elastic piece portions 28A and the second elastic piece portions 28B are alternately arranged along the circumferential direction D3. A single elastic portion 26 is formed by a combination (elastic piece unit) of the first elastic piece portion 28A and the second elastic piece portion 28B adjacent in the circumferential direction D3. The bump foil 23 of the present disclosure includes, for example, a first elastic piece unit 29A, a second elastic piece unit 29B, and a third elastic piece unit 29C along the circumferential direction D3. When the bump foil 23 is rolled, three (a plurality of) elastic portions 26 arranged in the circumferential direction D3 are formed by the first elastic piece unit 29A, the second elastic piece unit 29B, and the third elastic piece unit 29C (see FIG. 6).

The peak edge portion 28a of the first elastic piece unit 29A and the peak edge portion 28a of the second elastic piece unit 29B are formed by a slit 43 in common. Specifically, the slit 43 forming the second elastic piece portion 28B of the first elastic piece unit 29A and the slit 43 forming the first elastic piece portion 28A of the second elastic piece unit 29B are made in common. Further, the slit 43 forming the second elastic piece portion 28B of the second elastic piece unit 29B and the slit 43 forming the first elastic piece portion 28A of the third elastic piece unit 29C are made in common. That is, in the present disclosure, the peak edge portion 28a of one of the adjacent elastic portions 26 and the peak edge portion 28a of the other elastic portion 26 are formed by the slit 43 in common. By making the peak edge portion 28a of one of the adjacent elastic portions 26 and the peak edge portion 28a of the other elastic portion 26 in common by the single slit 43, the interval between the adjacent elastic portions 26 can be reduced. As a result, the shape and dimensions of the elastic portion 26, the number of the elastic portions formed in the circumferential direction D3, and the like can be easily optimized.

### <Set Foil>

As illustrated in FIGS. 3 and 4, the cylindrical set foil 24 is disposed to surround the bump foil 23 and supports the elastic portion 26, that is, the first elastic piece portion 28A and the second elastic piece portion 28B. When the elastic portion 26 is supported by the set foil 24, the first elastic piece portion 28A and the second elastic piece portion 28B may be supported in a state where elasticity is imparted, or may be supported in a state where elasticity does not occur. The set foil 24 includes an inner peripheral surface 24a facing the bump foil 23 and an outer peripheral surface 24b opposite the inner peripheral surface 24a. The set foil 24 in the unfolded state is a substantially rectangular thin plate, and both ends in the circumferential direction D3 are third hooks 31c bent in an L shape.

As illustrated in FIGS. 2 and 3, the top foil 22, the bump foil 23, and the set foil 24 are stacked in order from the inner peripheral side facing the rotating shaft 15. The first hooks 31a formed at both ends of the top foil 22, the second hooks 31b formed at both ends of the bump foil 23, and the third hooks 31c formed at both ends of the set foil 24 are arranged so as to overlap each other and form the locking structures 31. The locking structures 31 are accommodated in the locking groove 46b of the bearing housing 45.

### <Modification of Radial Foil Bearing>

FIG. 8 is a schematic cross-sectional view for functionally describing a radial foil bearing according to a modification. Note that a radial foil bearing 20A according to the modification has substantially the same structure and member as those of the radial foil bearing 20 described above. Therefore, the same structures and members are denoted by the same reference numerals, and a detailed description thereof will be omitted. The radial foil bearing 20A includes a foil assembly 21A and the bearing housing 45 that houses the foil assembly 21A. The foil assembly 21A does not include the set foil 24, and is formed by the top foil 22 and the bump foil 23. The elastic portion 26 of the bump foil 23 directly contacts the bearing housing 45 to elastically support the cylindrical portion 25, and further elastically supports the top foil 22 via the cylindrical portion 25. In addition, the elastic portion 26 bends while being in direct sliding contact with the bearing housing 45.

### <Modification of Bump Foil>

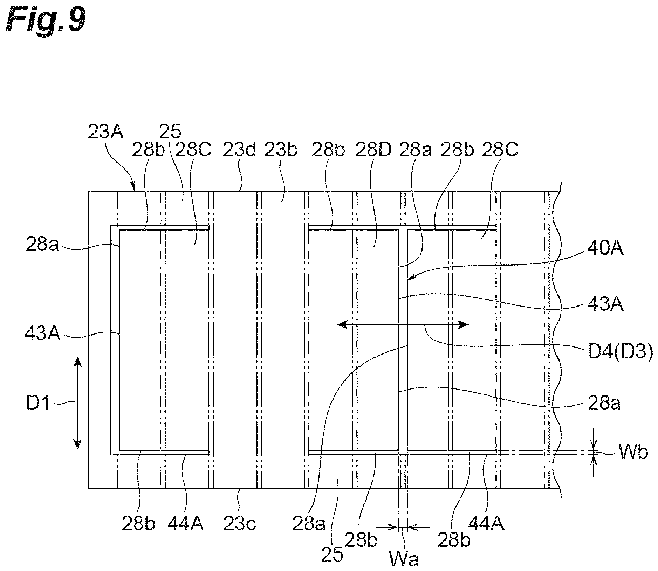

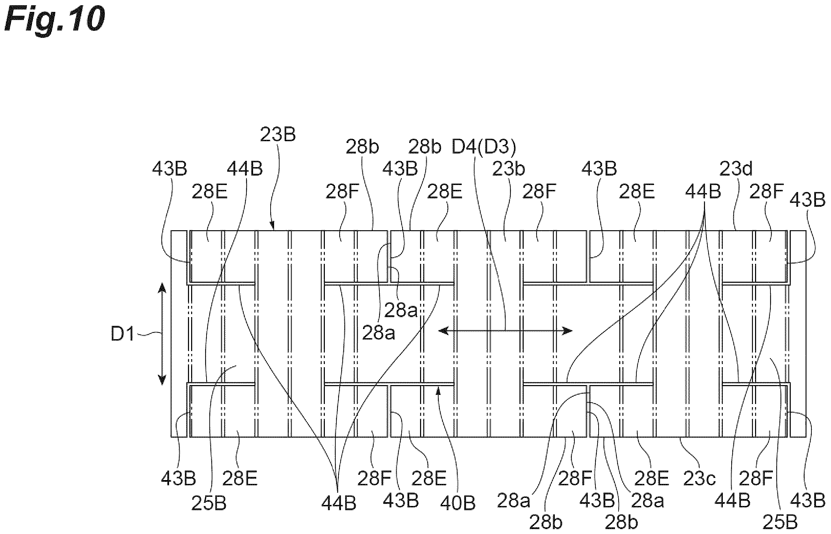

FIG. 9 is an enlarged plan view illustrating a bump foil 23A according to a first modification and illustrating a part of an outer peripheral surface 23b of the bump foil 23A in an unfolded state. FIG. 10 is a plan view illustrating a bump foil 23B according to a second modification and illustrating an outer peripheral surface 23b of the bump foil 23B in an unfolded state. Note that the bump foil 23A according to the first modification and the bump foil 23B according to the second modification can be applied to the radial foil bearings 20 and 20A described above, respectively.

The bump foil 23A includes a slit structure 40A that independently and deformably separates a first elastic piece portion 28C and a second elastic piece portion 28D from the cylindrical portion 25. In the first elastic piece portion 28C and the second elastic piece portion 28D adjacent in the circumferential direction D3, the peak edge portion 28a of the first elastic piece portion 28C and the peak edge portion 28a of the second elastic piece portion 28D are formed by a slit 43A in common. A width Wa of the slit 43A is larger than a width Wb of a side slit 44A. The width Wa of the slit 43A means the width of the bump foil 23 in the circumferential direction D3, and means the width of the bump foil 23 in the rolled state in the circumferential direction D3. Further, the width Wb of the side slit 44A means a width in the axial direction D1.

The peak edge portion 28a of the first elastic piece portion 28C and the peak edge portion 28a of the second elastic piece portion 28D move in an approaching direction when the first elastic piece portion 28C and the second elastic piece portion 28D are flexed and expanded. Here, since the width Wa of the slit 43A forming the peak edge portion 28a is larger than the width Wb of the side slit 44A, interference between the peak edge portions 28a can be easily prevented as compared with a case where the width of the slit 43 and the width of the side slit 44 are the same.

As illustrated in FIG. 10, the bump foil 23B according to the second modification includes a first end edge 23c that is an end on one side in the axial direction D1, and a second end edge 23d opposite to the first end edge 23c in the axial direction D1. A cylindrical portion 25B of the bump foil 23B is provided at a position spaced apart from the first end edge 23c and the second end edge 23d. For example, the cylindrical portion 25B includes a central region between the first end edge 23c and the second end edge 23d, and is provided to extend in the circumferential direction D3 (circumferential direction D3). The bump foil 23B includes a first elastic piece portion 28E and a second elastic piece portion 28F adjacent to the cylindrical portion 25B in the axial direction D1. That is, the first elastic piece portion 28E and the second elastic piece portion 28F are provided between the first end edge 23c or the second end edge 23d and the cylindrical portion 25B.

The bump foil 23B includes a slit structure 40B that independently and deformably separates the first elastic piece portion 28E and the second elastic piece portion 28F from the cylindrical portion 25B. The slit structure 40B includes a slit 43B that forms the peak edge portion 28a and a side slit 44B that is connected to the slit 43B and forms the side edge portion 28b. The slit 43B is opened at the first end edge 23c or the second end edge 23d.

At least a part of the side edge portion 28b of the first elastic piece portion 28E and the second elastic piece portion 28F is formed at the first end edge 23c or the second end edge 23d. Specifically, out of the pair (plurality) of side edge portions 28b forming the first elastic piece portion 28E, a part of the side edge portions 28b is formed at the first end edge 23c or the second end edge 23d, and the other side edge portion 28b is formed by the side slit 44B. Further, out of the pair (plurality) of side edge portions 28b forming the second elastic piece portion 28F, a part of the side edge portions 28b is formed at the first end edge 23c or the second end edge 23d, and the other side edge portion 28b is formed by the side slit 44B. That is, in the case of the bump foil 23B according to the second modification, the slit structure 40B forms the first elastic piece portion 28E or the second elastic piece portion 28F in cooperation with the first end edge 23c or the second end edge 23d.

### <Method for Manufacturing Radial Foil Bearing>

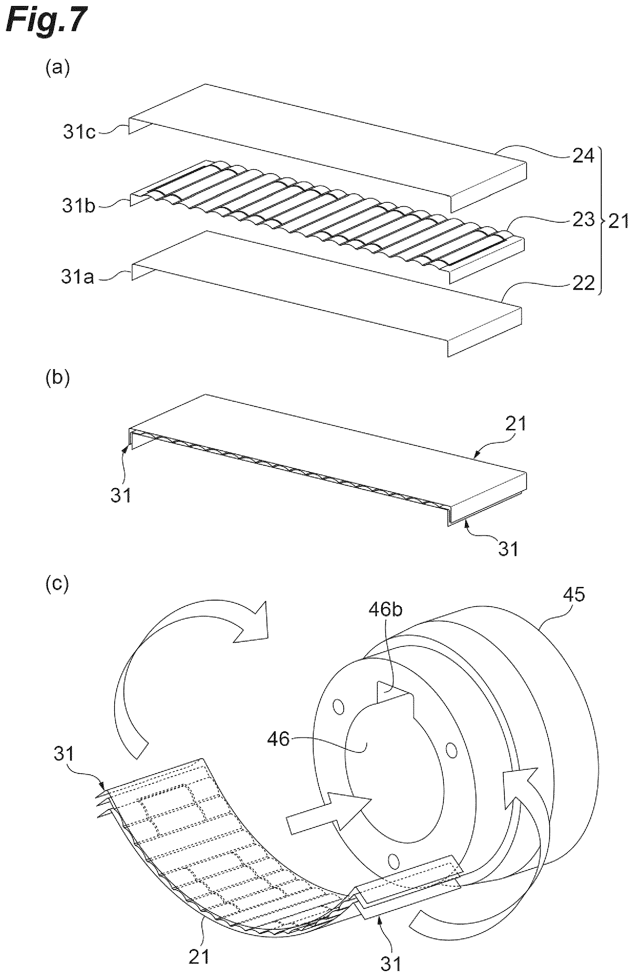

Next, a method for manufacturing the radial foil bearing 20 will be described with reference to FIG. 7. The manufacturing method of the present disclosure includes a foil forming step, a foil assembly forming step, and a foil assembly installing step.

The foil forming step includes a top foil forming step, a bump foil forming step, and a set foil forming step. In the top foil forming step, a metal first plate-like member is processed into a predetermined shape (for example, rectangular) to form the top foil 22 in the unfolded state. Further, both ends of the top foil 22 in the circumferential direction D3 are bent to form the first hooks 31a. Note that, in the method for manufacturing the radial foil bearing 20A according to the modification described above, the set foil forming step can be omitted. Further, in the case of using the top foil 22, the bump foils 23, 23A, and 23B, and the set foil 24 processed into a desired shape, the foil forming step can be omitted.

In the bump foil forming step, a metal second plate-like member is processed into a predetermined shape (for example, rectangular) to form the bump foil 23 in the unfolded state. Both ends of the bump foil 23 in the circumferential direction D3 are bent to form the second hooks 31b. Further, the slit structure 40 for forming the cylindrical portion 25 and the elastic portion 26 is formed in the bump foil 23. The elastic portion 26 includes the first elastic piece portions 28A, 28C, and 28E and the second elastic piece portions 28B, 28D, and 28F. Further, the bump foil 23 is processed to form the plurality of arc-shaped crest portions 32. In the present disclosure, by forming the slit structure 40, the cylindrical portion 25 and the elastic portion 26 can be integrally formed when the bump foil 23 is rolled. That is, it is not necessary to form the elastic portion 26 by combining a plurality of members. Note that the slit structure 40 may be formed before the formation of the crest portions 32 or after the formation of the crest portions 32.

In the set foil forming step, a metal third plate-like member is processed into a predetermined shape (for example, rectangular) to form the set foil 24 in the unfolded state. Both ends of the set foil 24 in the circumferential direction D3 are bent to form the third hooks 31c.

As illustrated in (b) and (c) of FIG. 7, in the foil assembly forming step, a stacked body in which the top foil 22 in the unfolded state, the bump foil 23 in the unfolded state, and the top foil 22 in the unfolded state are overlapped is rolled to form a cylindrical foil assembly 21. In forming the foil assembly 21, the first hooks 31a, the second hooks 31b, and the third hooks 31c are overlapped to form the locking structures 31. When the bump foil 23 is rolled to form the foil assembly 21, the slit structure 40 forms an elastic portion 26.

In the foil assembly installing step, the foil assembly 21 is inserted into the bearing housing 45 so as to surround the rotating shaft 15 to form the radial foil bearing 20. Specifically, the foil assembly 21 is inserted into the shaft hole 46 of the bearing housing 45. A ring-shaped pressing member or the like is installed at an end portion of the bearing housing 45 in the axial direction D1 (see FIG. 1) to regulate displacement of the foil assembly 21 in the axial direction D1.

Next, operational effects exhibited by the radial foil bearings 20 and 20A of the present disclosure will be described.

The bump foils 23, 23A, and 23B of the radial foil bearings 20 and 20A include the cylindrical portion 25 and the elastic piece portions 28A to 28F. The elastic piece portions 28A to 28F are deformable independently of the cylindrical portion 25. The elastic piece portions 28A to 28F are directly or indirectly supported by the bearing housing 45, and support the top foil 22 via the cylindrical portion 25 adjacent in the axial direction D1. Further, the elastic piece portions 28A to 28F can be expanded in the circumferential direction D3 while being directly or indirectly supported by the bearing housing 45.

The elastic piece portions 28A to 28F of the radial foil bearing 20 deflect while being in indirect sliding contact with the bearing housing 45, and the elastic piece portions 28A to 28F of the radial foil bearing 20A deflect while being in direct sliding contact with the bearing housing 45. When elastically deformed and expanded while being indirectly or directly supported by the bearing housing 45, the elastic piece portions 28A to 28F elastically support the cylindrical portion 25, and further elastically support the top foil 22 via the cylindrical portion 25. As a result, the radial foil bearings 20 and 20A are also resistant to vibration of the rotating shaft 15 rotating at a high speed, and the like, and the rotating shaft 15 can be stably supported.

Further, in the present disclosure, since the elastic piece portions 28A to 28F and the cylindrical portion 25 are integrally formed, when installation of the cylindrical portion 25 is completed, appropriate installation of the elastic piece portions 28A to 28F is completed. As a result, assemblability at the time of installing the bump foils 23, 23A, and 23B can be improved.

Further, the bump foils 23, 23A, and 23B include the coupling portion 27 that couples the elastic piece portions 28A to 28F and the cylindrical portion 25. Each of the elastic piece portions 28A to 28F includes the peak edge portion 28a formed on the opposite side in the circumferential direction D3 with respect to the coupling portion 27, and the side edge portion 28b extending from the peak edge portion 28a to the coupling portion 27. Since the peak edge portion 28a is formed by the slit structure 40, 40A, or 40B to be a free end, the peak edge portion can be moved with the coupling portion 27 as a fulcrum.

The elastic piece portions 28A to 28F elastically support the rotating shaft 15 via the top foil 22 by expansion thereof. Further, the elastic piece portions 28A to 28F include the plurality of crest portions 32 arranged adjacent to each other in the circumferential direction D3. The plurality of crest portions 32 can be elastically deformed and expanded in the circumferential direction D3. Since the radial foil bearings 20 and 20A include the plurality of crest portions 32, the top foil 22 can be elastically supported by expansion of each of the plurality of crest portions 32 in addition to development of the elastic piece portions 28A to 28F. Further, the slits 43, 43A, or 43B forming the peak edge portions 28a of the elastic piece portions 28A to 28F are provided between the adjacent crest portions 32 so as to avoid the crest portions 32. As a result, the elastic function of the plurality of crest portions 32 expandable in the circumferential direction D3 is hardly impaired by the elastic deformation.

Further, the radial foil bearings 20 and 20A of the present disclosure also include the set foil 24 that supports the first elastic piece portions 28A, 28C, 28E and the second elastic piece portions 28B, 28D, 28F. With the set foil 24, it is possible to prevent the first elastic piece portions 28A, 28C, and 28E and the second elastic piece portions 28B, 28D, and 28F from springing outward from the cylindrical portion 25 and prevent the elastic function from deteriorating. In addition, by providing the set foil 24, friction is generated between the bump foil 23 and the set foil 24, and damping performance is improved.

Further, in the first elastic piece portions 28A, 28C, and 28E and the second elastic piece portions 28B, 28D, and 28F adjacent to each other in the circumferential direction D3, the peak edge portions 28a of the first elastic piece portions 28A, 28C, and 28E and the peak edge portions 28a of the second elastic piece portions 28B, 28D, and 28F are formed by the slits 43, 43A, and 43B in common. By making the slits 43A or 43B in common, the interval between the adjacent first elastic piece portions 28A, 28C, and 28E and the adjacent second elastic piece portions 28B, 28D, and 28F can be reduced, and the shapes and dimensions of the first elastic piece portions 28A, 28C, and 28E and the second elastic piece portions 28B, 28D, and 28F and the number of the first elastic piece portions 28A, 28C, and 28E and the second elastic piece portions 28B, 28D, and 28F formed in the circumferential direction D3, and the like can be easily optimized.

In addition, in the bump foil 23A according to Modification 1, the width Wa of the slit 43A in the circumferential direction D3 is larger than the width Wb of the side slit 44Ain the axial direction D1. For example, when the peak edge portion 28a of the first elastic piece portion 28C and the peak edge portion 28a of the second elastic piece portion 28D are formed by the slit 43A in common, when the first elastic piece portion 28C or the second elastic piece portion 28D is expanded, the peak edge portions 28a move in a direction of approaching each other. Here, since the width Wa of the slit 43A is larger than the width Wb of the side slit 44A, it is easy to prevent interference between the peak edge portions 28a as compared with a case where the width of the slit and the width of the side slit are the same.

Further, in the bump foil 23 or 23A, the slits 43 or 43B and the side slits 44 or 44B of the slit structure 40 or 40A are spaced apart from the first end edge 23c and the second end edge 23d of the bump foils 23 and 23A. Further, the slits 43 or 43B and the side slits 44 or 44B are provided so as to be closed in the bump foil 23 or 23A. As a result, it is easy to form the first elastic piece portions 28A and 28C and the second elastic piece portions 28B and 28D having a desired elastic force at a position spaced apart from the first end edge 23c or the second end edge 23d, for example, at a position close to the center in the axial direction D1.

Further, the slit structure 40B of the bump foil 23B according to the second modification includes the slit 43B forming the peak edge portion 28a, and the slit 43B is opened at the first end edge 23c or the second end edge 23d. As a result, the peak edge portion 28a can be easily formed by making a cut or the like from the first end edge 23c or the second end edge 23d.

Further, the plurality of crest portions 32 is also provided in the coupling portion 27 in addition to the elastic piece portions 28A to 28F. The coupling portion 27 is less likely to bend as compared with the elastic piece portions 28A to 28F. On the other hand, the elastic piece portions 28A to 28F are more easily bent as the elastic piece portions are farther from the coupling portion 27 in the circumferential direction D3 and closer to the peak edge portion 28a. The elastic supporting force of the crest portions 32 with respect to the top foil 22 decreases more at a position where the elastic piece portions 28A to 28F are more easily bent. Therefore, this elastic supporting force is the largest at the coupling portion 27, and is smaller as it is closer to each peak edge portion 28a of the elastic piece portions 28A to 28F. That is, the elastic support force that supports the top foil 22 by the plurality of crest portions 32 is not uniform but varies in the circumferential direction D3. By arranging the plurality of crest portions 32 so that the elastic supporting force changes, stability of the top foil 22 that vibrates by interfering with the rotating shaft 15 can be improved, and the stability when supporting the rotating shaft 15 rotating at a high speed is improved.

Further, in the method for manufacturing the radial foil bearing 20, the top foil 22, the bump foils 23, 23A, and 23B, and the set foil 24 are rolled to form the foil assembly 21 in the foil assembly forming step, and the foil assembly 21 is inserted and installed in the bearing housing 45 so as to surround the rotating shaft 15 in the foil assembly installing step. With this manufacturing method, it is possible to improve assemblability when manufacturing the radial foil bearing 20. Further, with the radial foil bearing 20 manufactured by this manufacturing method, it is possible to stably support the rotating shaft 15 during high-speed rotation.

Note that, in the above manufacturing method, in addition to the top foil 22 in the unfolded state and the bump foil 23 in the unfolded state, the set foil 24 in the unfolded state is rolled in an overlapped state to form the foil assembly 21. However, it is also possible to manufacture the radial foil bearing 20A in which the set foil 24 is omitted. When the radial foil bearing 20A is manufactured, the foil assembly 21A is formed by overlapping and rolling the top foil 22 in the unfolded state and the expanded bump foil 23 in the unfolded state. In the foil assembly installing step, the foil assembly 21A is inserted and installed in the bearing housing 45 so as to surround the rotating shaft 15.

The radial foil bearing according to the present disclosure is not limited to the above-described examples, and various other modifications are possible. For example, the above-described examples may be combined with each other according to a necessary purpose and effect. In addition, the elastic piece portion may have a configuration in which a plurality of crest portions is omitted. For example, the first elastic piece portion may be a single arc-shaped plate-like portion as a whole without including a plurality of arc-shaped crest portions. Further, the second elastic piece portion may be a single arc-shaped plate-like portion as a whole without including a plurality of arc-shaped crest portions.

### Reference Signs List

15 Rotating shaft
20, 20A Radial foil bearing
21, 21A Foil assembly
45 Bearing housing
22 Top foil
23, 23A, 23B Bump Foil
23c First end edge
23d Second end edge
24 Set Foil
D1 Axial direction
D3 Circumferential direction
22a Facing surface
32 Crest portion
25 Cylindrical portion
27 Coupling portion
28A, 28C, 28E First elastic piece portion
28B, 28D, 28F Second elastic piece portion
28a Peak edge portion
28b Side edge portion
40, 40A, 40B Slit structure
43, 43A, 43B Slit
44, 44A, 44B Side slit
Wa Width of slit
Wb Width of side slit

## Claims

1. A radial foil bearing comprising:
a top foil including a facing surface facing a rotating shaft;
a bump foil disposed on an outside opposite to the facing surface of the top foil; and
a bearing housing disposed to surround the bump foil, wherein
the bump foil includes a cylindrical portion surrounding the top foil in a cylindrical shape, and an elastic piece portion adjacent to the cylindrical portion in an axial direction of the rotating shaft, the elastic piece portion being deformable independently of the cylindrical portion and expandable in a circumferential direction, and
the elastic piece portion is supported by the bearing housing.

2. The radial foil bearing according to claim 1, wherein
the elastic piece portion and the cylindrical portion are integrally formed, and
the bump foil includes a slit structure separating the elastic piece portion from the cylindrical portion so that the elastic piece portion is deformable independently of the cylindrical portion.

3. The radial foil bearing according to claim 2, wherein
the bump foil includes a coupling portion coupling the cylindrical portion and the elastic piece portion,
the elastic piece portion includes a peak edge portion formed on a side opposite to the coupling portion in the circumferential direction, and a side edge portion extending from the peak edge portion to the coupling portion, and
the peak edge portion is formed by the slit structure to be a free end.

4. The radial foil bearing according to claim 3, wherein
the bump foil includes a first end edge being an end on one side in the axial direction, and a second end edge opposite to the first end edge in the axial direction,
the slit structure includes a slit forming the peak edge portion, and a side slit connected to the slit and forming the side edge portion, and
the slit and the side slit are spaced apart from the first end edge and the second end edge and are configured to close within the bump foil.

5. The radial foil bearing according to claim 3, wherein
the bump foil includes a first end edge being an end on one side in the axial direction, and a second end edge opposite to the first end edge in the axial direction,
the slit structure includes a slit forming the peak edge portion,
the slit is opened at the first end edge or the second end edge, and
at least a portion of the side edge portion is formed at the first end edge or the second end edge where the slit is opened.

6. The radial foil bearing according to claim 3, wherein
the slit structure includes a slit forming the peak edge portion,
the elastic piece portion includes a plurality of crest portions arranged adjacent to each other in the circumferential direction and expandable in the circumferential direction by elastic deformation, and
the slit extends along the crest portions while avoiding the crest portions between the crest portions arranged adjacent to each other.

7. The radial foil bearing according to claim 3, wherein
the slit structure includes a slit forming the peak edge portion,
a plurality of the elastic piece portions is provided side by side in the circumferential direction, and
the peak edge portion of one of the elastic piece portions adjacent to each other and the peak edge portion of another of the elastic piece portions are formed by the slit in common.

8. The radial foil bearing according to claim 7, wherein
the slit structure further includes a side slit forming the side edge portion, and
a width of the slit in the circumferential direction is larger than a width of the side slit in the axial direction.

9. The radial foil bearing according to claim 1, further comprising a set foil disposed to surround the bump foil and supporting the elastic piece portion in a state where elasticity is imparted to the elastic piece portion.

10. A method for manufacturing a radial foil bearing comprising a top foil including a facing surface facing a rotating shaft, a bump foil disposed on an outside of the top foil, and a bearing housing disposed to surround the bump foil, the method comprising:
a step of rolling a stack in which the top foil in an unfolded state and the bump foil in an unfolded state are overlapped to form a cylindrical foil assembly; and
a step of inserting and installing the foil assembly into a cylindrical bearing housing so as to surround the rotating shaft, wherein
the bump foil includes a cylindrical portion surrounding the top foil in a cylindrical shape, and an elastic piece portion adjacent to the cylindrical portion in an axial direction of the rotating shaft, the elastic piece portion being deformable independently of the cylindrical portion and expandable in a circumferential direction, and
by inserting the foil assembly into the bearing housing, the elastic piece portion is supported by the bearing housing.

11. The method for manufacturing the radial foil bearing according to claim 10, wherein in the step to form the foil assembly, a set foil in an unfolded state is disposed so as to overlap the bump foil on a side opposite to the top foil to form the stack, and the stack is rolled to form the foil assembly.
